# EUROPÄISCHE PATENTANMELDUNG

(11) **EP 3 718 455 A1**
(43) Veröffentlichungstag der Anmeldung: **07.10.2020**
(21) Anmeldenummer: 20163189.2
(22) Anmeldetag: 13.03.2020
(51) Int. Cl.: A47L 15/42

(54) **GESCHIRRSPÜLERDÜSE ZUR REINIGUNG VON GLÄSERN**

(30) Priorität: 05.04.2019 CH 4682019
(71) Anmelder: V-Zug AG, 6300 Zug (CH)
(72) Erfinder: Haas, Simon, 6004 Luzern (CH)
(74) Vertreter: Hochreutener, Joel Marc

(57) **Zusammenfassung**

Eine Düse zur Reinigung eines Behälters umfasst einen Düsenkörper (1) mit einem fluiddurchströmten Innenkanal (11), an dessen Ende eine Auslassöffnung (12) angeordnet ist und einen Ablenkkörper (2) mit einer Oberfläche zur Ablenkung des aus der Auslassöffnung (12) austretenden Fluidstrahls. Der Ablenkkörper (2) ist zumindest in einem Abschnitt (26) derart ausgestaltet, dass eine Querschnittsfläche (27) des Ablenkkörpers (2) in Strömungsrichtung grösser wird.

## Beschreibung

### Gebiet der Erfindung

Die Erfindung betrifft eine Düse zur Reinigung eines Behälters, welche einen Düsenkörper mit einem fluiddurchströmten Innenkanal, an dessen Ende eine Auslassöffnung angeordnet ist, und einen Ablenkkörper mit einer Oberfläche zur Ablenkung des aus der Auslassöffnung austretenden Fluidstrahls aufweist.

### Hintergrund

Es sind unterschiedliche Düsen für Geschirrspüler zur inwendigen Reinigung von Behältern bekannt. Die Reinigung von Behältern mittels spezieller Düsen ist dann erforderlich, wenn die Behälter aufgrund ihrer Geometrie mittels konventioneller Sprüharmen inwendig nicht ausreichend gereinigt werden können. Dies ist insbesondere dann der Fall, wenn der Behälter eine im Verhältnis zur Länge des Behälters kleine Öffnung aufweist. Sie haben die Aufgabe, Flüssigkeit gleichmässig auf den Behälter zu sprühen, um diesen zuverlässig zu reinigen. Bekannt sind beispielsweise Kegeldüsen oder Hohlkegeldüsen mit einer Kreis- oder Ringfläche als Sprühfläche. Sie erzeugen eine gleichmässige Flüssigkeitsverteilung und benötigen einen hohen Arbeitsdruck. Zur Reinigung eines Behälters eigenen sich insbesondere Mehrkanal-Vollstrahldüsen, bei welchen Flüssigkeit aus einer Mehrzahl von Auslassöffnungen ausströmt und dadurch eine Mehrzahl von Flüssigkeitsstrahlen gebildet wird. Dadurch kann eine gründliche Reinigung der Innenseite des Behälters gewährleistet werden.

Die Auslassöffnungen müssen allerdings aufgrund von ihrer Mehrzahl klein gehalten werden. Solche Mehrkanal-Vollstrahldüsen sind deshalb verstopfungsempfindlich und weisen einen hohen Strömungswiderstand auf.

Die Düsen sind abhängig von der Pumpenleistung bzw. dem Arbeitsdruck zu dimensionieren und die Anzahl der Düsen ist entsprechend festzulegen. "Sparsame" Düsen weisen kleinere Auslassöffnungen auf und bewirken dadurch einen kleineren Volumenstrom bei gleichem Druckabfall. Aufgrund des geringeren Volumenstroms kann eine grössere Anzahl von "sparsamen" Düsen eingesetzt werden. "Sparsame" Düsen sind jedoch verstopfungsanfälliger.

Die Düsen und der Arbeitsdruck müssen gegenseitig abgestimmt sein, sodass die gewünschte Düsencharakteristik, beispielsweise die gewünschte Sprühhöhe oder die mechanische Wirkung des Strahls, erzielt wird.

### Darstellung der Erfindung

Es stellt sich die Aufgabe, eine Düse zur Reinigung eines Behälters bereitzustellen, welche gründlich und effizient reinigt.

Diese Aufgabe wird durch den Gegenstand des unabhängigen Anspruchs gelöst.

Demgemäss umfasst eine Düse zur Reinigung eines Behälters einen Düsenkörper mit einem fluiddurchströmten Innenkanal, an dessen Ende eine Auslassöffnung angeordnet ist, und einen Ablenkkörper mit einer Oberfläche zur Ablenkung des aus der Auslassöffnung austretenden, insbesondere ausgetretenen, Fluidstrahls. Insbesondere ist der Ablenkkörper derart angeordnet, dass er das aus dem Innenkanal durch die Auslassöffnung austretende, insbesondere ausgetretene, Fluid ablenkt.

Der Ablenkkörper ist zumindest in einem Abschnitt derart ausgestaltet, dass eine Querschnittsfläche des Ablenkkörpers in Strömungsrichtung grösser wird.

Die "Auslassöffnung" ist derjenige Ort, an welchem das Fluid aus dem Düsenkörper austritt. Die Auslassöffnung ist insbesondere eine Öffnung, bei welcher die Strömung erstmals Umgebungsdruck erreicht.

Die Querschnittsfläche ist insbesondere diejenige Fläche, zu welcher der gemittelte Geschwindigkeitsvektor der Fluidströmung im Innenkanal bei der Auslassöffnung normal steht. Handelt es sich beim Innenkanal beispielsweise um ein einfaches, rundes Rohr mit einer Rohrmittelachse und strömt das Fluid somit gleichmässig in Richtung der Rohrmittelachse, so ist die Querschnittsfläche des Ablenkkörpers diejenige Fläche, welche zur Rohrmittelachse normal steht.

"In Strömungsrichtung" ist diejenige Richtung, in welche das Fluid bei sachgemässer Verwendung der Düse strömt. Wird die Düse beispielsweise in einer Geschirrspülmaschine eingesetzt, strömt das Fluid von der Geschirrspülmaschinenpumpe bis zur Düse.

Insbesondere wird die Querschnittsfläche des Ablenkkörpers mit zunehmender Beabstandung von der Auslassöffnung grösser.

Die zunehmende Grösse der Querschnittsfläche des Ablenkkörpers hat den Vorteil, dass das Fluid nach aussen abgelenkt wird und dadurch eine gleichmässige Fluidverteilung entsteht, was zu einer gründlichen Reinigung eines Behälters führt.

Mit Vorteil weist ein Ende des Ablenkkörpers, welches zur Auslassöffnung gerichtet ist, die kleinste Querschnittsfläche des Ablenkkörpers auf. Mit zunehmendem Abstand von der Auslassöffnung weist der Ablenkkörper im Abschnitt eine immer grösser werdende Querschnittsfläche auf. Das Ende des Ablenkkörpers kann insbesondere spitzig oder stumpf abgerundet sein.

Diese Ausgestaltung hat den Vorteil, dass das Fluid ohne grösseren Widerstand auf den Ablenkkörper prallt und von diesem entlang der Oberfläche des Ablenckörpers geführt und abgelenkt wird.

In einer besonderen Ausführungsform sind der Abschnitt und/oder der Ablenkkörper mindestens teilweise, insbesondere vollständig, ausserhalb des fluiddurchströmten Innenkanals angeordnet. Insbesondere sind der Abschnitt und/oder der Ablenkkörper von der Auslassöffnung um mindestens 0.5 mm, insbesondere 1 mm, insbesondere 1.5 mm beabstandet.

Die Anordnung des Ablenkkörpers ausserhalb des Innenkanals und insbesondere mit Beabstandung von der Auslassöffnung hat den Vorteil, dass der Innenkanal vollständig frei von Hindernissen ausgestaltet werden kann, sodass das Fluid mit einem möglichst geringen Strömungswiderstand strömt und die Verstopfungsgefahr reduziert ist.

Im Weiteren kann der Abschnitt, insbesondere der Ablenkkörper, als ein Kegel, insbesondere als ein stumpfer oder ein spitzer Kegel, ausgestaltet sein. Insbesondere ist die Spitze oder die abgestumpfte Spitze des Kegels gegen die Auslassöffnung des Düsenkörpers gerichtet. Mit der Kegelform kann der Fluidstrahl besonders gleichmässig und effizient abgelenkt werden.

In einer besonderen Ausführungsform ist der Innenkanal rohrförmig ausgestaltet und weist eine Rohrmittelachse auf. Die Normale der Grundfläche des Kegels ist parallel zur Rohrmittelachse, insbesondere wobei die Rohrmittelachse durch die Spitze des Kegels verläuft.

Mit Vorteil ist derjenige Bereich der Oberfläche des Ablenkkörpers, welcher der Auslassöffnung abgewandt ist, sternförmig ausgestaltet. Bei einem Kegel beispielsweise ist die abgewandte Seite die Grundfläche.

Bei einer sternförmigen Ausgestaltung der Grundfläche sind an der Mantelfläche des Ablenkkörpers, an welcher das Fluid entlangströmt und abgelenkt wird, Vertiefungen ausgeführt, welche die Fluidströmung gezielt führen.

In einer besonderen Ausführungsform sind an der Oberfläche des Ablenkkörpers, bei einem Kegel insbesondere an der Mantelfläche, mindestens ein, insbesondere mehr als drei, insbesondere mehr als fünf, insbesondere mehr als sieben, Trennelemente angeordnet. Diese Trennelemente sind derart ausgestaltet, dass der Fluidstrahl in mindestens zwei, insbesondere mindestens vier, insbesondere mindestens acht, Teilfluidstrahlen aufgetrennt wird. Insbesondere sind die Trennelemente als Stege oder Rippen ausgebildet, welche insbesondere normal zur Oberfläche angeordnet sind.

Mit Vorteil verlaufen die Trennelemente nur über einen Teilabschnitt derjenigen Oberfläche des Ablenkkörpers, welcher das Fluid entlangströmt.

Durch die Trennelemente wird der Fluidstrahl in mehrere einzelne Teilfluidstrahlen aufgeteilt. Eine solche Düse führt zum gleichen Ergebnis wie eine Mehrkanaldüse mit mehreren Auslassöffnungen. Da die anspruchsgemässe Düse allerdings nur eine einzige grosse Auslassöffnung aufweist und der Fluidstrahl erst nach Austritt aus dem Innenkanal in eine Mehrzahl von Teilfluidstrahlen aufgeteilt wird, ist die Verstopfungsgefahr reduziert.

Im Weiteren kann die Oberfläche des Ablenckörpers Vertiefungen, insbesondere Furchen, zur Führung des Fluids aufweisen. Dies ermöglicht eine besonders gezielte Führung des Fluids.

Mit Vorteil ist die Düse einstückig ausgestaltet. D.h. der Düsenkörper und der Ablenkkörper sind Bestandteil eines einzigen, einstückigen Bauteils. Die Einstückigkeit führt zu einer robusten Ausführungsform mit geringen Herstellkosten.

Insbesondere umfasst der Ablenkkörper einen Ablenkkörperinnenkanal, welcher insbesondere zylindrisch ausgestaltet ist. Im Weiteren kann der Ablenkkörperinnenkanal derart angeordnet und ausgestaltet sein, dass das aus der Auslassöffnung austretende Fluid den Ablenkkörperinnenkanal ohne Ablenkung durchströmt.

Wird mit der anspruchsgemässen Düse ein Behälter gereinigt dient das durch den Ablenkkörperinnenkanal strömende Fluid zur zusätzlichen Reinigung des Behälterbodens. Aus der Düse entweichen damit auch rein vertikal ausgerichtete Fluidteilstrahlen.

Bei einem Kegel ist die Mittelachse des Ablenkkörperinnenkanals identisch mit einer Normalen zur Grundfläche des Kegels, welche durch die Spitze verläuft.

Mit Vorteil weist die Düse nur genau eine einzige Auslassöffnung auf. Unter einer Auslassöffnung ist eine Öffnung zu verstehen, bei welcher die Strömung erstmals Umgebungsdruck erreicht.

Im Weiteren ist ein Geschirrspüler geschützt, welcher eine Düse gemäss der vorliegenden Erfindung und ein Durchflusssieb mit einer Maschenweite zum Sieben von Prozesswasser aufweist. Der Innenkanal und die Auslassöffnung weisen dabei einen Durchmesser auf, welcher grösser als die Maschenweite des Siebes ist. Eine solche Dimensionierung verhindert, dass die Düse durch Schmutzpartikel verstopft wird.

Im Weiteren ist ein Geschirrspüler mit einer erfinderischen Düse geschützt, welcher derart ausgestaltet ist, dass sowohl Reinigungswasser als auch Klarspülwasser durch die Düse strömen.

Ebenso ist ein Verfahren zum Herstellen der erfinderischen Düse geschützt, wobei die Herstellung mittels additiver Fertigung oder mittels selektivem Lasersintern erfolgt. Insbesondere erfolgt die Herstellung aus rostfreiem SLS-Material.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1 eine Stern-Kegel-Düse in isometrischer Ansicht;
Fig. 1a die Stern-Kegel-Düse ohne Bezugsziffern;
Fig. 2 die Stern-Kegel-Düse in Seitenansicht;
Fig. 3 die Stern-Kegel-Düse mit Ansicht von unten;
Fig. 4 die Stern-Kegel-Düse mit Ansicht von oben;
Fig. 5 eine Schnittzeichnung der Stern-Kegel-Düse durch die Linie A-A;
Fig. 6 eine Schnittzeichnung der Stern-Kegel-Düse durch die Linie B-B;
Fig. 7 ein Zufuhrrohr eines Geschirrspülers mit einer eingesetzten Stern-Kegel-Düse in isometrischer Ansicht;
Fig. 8 eine Detailansicht der eingesetzten Stern-Kegel-Düse; und
Fig. 9 eine Schnittzeichnung der eingesetzten Stern-Kegel-Düse.

### Weg zur Ausführung der Erfindung

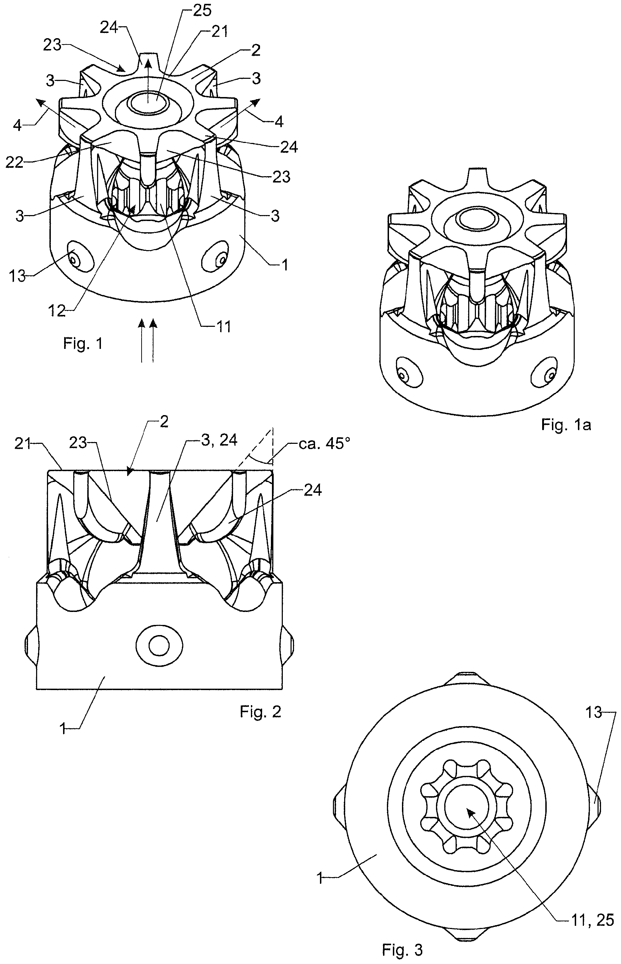

Fig. 1 zeigt eine Stern-Kegel-Düse in isometrischer Ansicht. Begriffe wie "oben", "unten", "seitlich" etc. sind mit Bezug auf die Fig. 1 zu verstehen, d.h. das Fluid strömt von unten nach oben durch die Stern-Kegel-Düse. Die Fluidströmung ist durch Pfeile illustriert.

Die Stern-Kegel-Düse umfasst einen Düsenkörper 1 und einen Ablenkkörper 2. Der Düsenkörper 1 umfasst einen Innenkanal 11 und eine Auslassöffnung 12. Der Ablenkkörper 2 ist als Kegel mit einer sternförmigen Grundfläche 21, welche der Auslassöffnung abgewandt ist, und einer entsprechend geformten Mantelfläche 22 ausgestaltet. Die Grundfläche 21 und die Mantelfläche 22 bilden die Oberfläche des kegelförmigen Ablenkkörpers 2. Aufgrund der Sternform der Grundfläche 21 umfasst die Mantelfläche 22 eine Mehrzahl an Furchen 23, in welchen das Fluid von unten nach oben entlang der Mantelfläche 22 geführt wird. Die einzelnen Furchen 23 sind durch Trennelemente 24, welche auch als Stege bezeichnet werden können, voneinander räumlich getrennt. Die Trennelemente 24 ergeben sich automatisch aufgrund der sternförmigen Ausgestaltung der Grundfläche 21 und sind in der vorliegenden Ausführungsform Bestandteil der Kegelgeometrie.

Vier von insgesamt acht Trennelementen 24 sind über die Stützen 3 mit dem Düsenkörper 1 verbunden.

Im Weiteren umfasst der Ablenkkörper 2 einen zylindrischen Ablenkkörperinnenkanal 25, welcher an der Spitze der Kegelform beginnt, entlang der Zentralachse der Kegelform verläuft und an der Grundfläche 21 austritt, sodass ein Teil des Fluids vom Ablenkkörper 2 nicht abgelenkt wird, sondern vertikal von unten nach oben strömt.

Bei Gebrauch strömt das Fluid in Form eines einzigen Hauptfluidstrahls von unten durch den Innenkanal 11 durch den Düsenkörper 1 nach oben und verlässt den Düsenkörper 1 durch die Auslassöffnung 12. An der Auslassöffnung 12 weist das Fluid erstmals Umgebungsdruck auf.

Das Fluid prallt sodann von unten an die Mantelfläche 22 des Ablenkkörpers 2 und strömt entlang der Mantelfläche 22 nach oben, wobei das Fluid in der vorliegenden Ausführungsform durch die Furchen 23 und zwischen den Trennelementen 24 geführt wird. Die Mantelfläche 22 ist zur Vertikalen mit einem Winkel von ca. 45° geneigt, sodass das Fluid um einen Winkel von ca. 45° abgelenkt wird.

Aufgrund der Furchen 23 und der Trennelemente 24 spaltet der Ablenkkörper 2 den aus der Auslassöffnung 11 austretenden und an die Mantelfläche 22 prallenden Hauptfluidstrahl in insgesamt acht einzelne Teilfluidstrahlen auf. Sodann strömen die acht Teilfluidstrahlen ca. im 45°-Winkel zur Vertikalen in Richtung der Pfeile 4 von der Stern-Kegel-Düse weg. Mittels den acht erzeugten Teilfluidstrahlen lässt sich ein Behälter besonders gut reinigen.

An den Seitenflächen des Düsenkörpers sind Rastelemente 13 angeordnet, mit welchen sich die Düse in eine Rohrleitung einrasten lässt.

Die Stern-Kegel-Düse ist einstückig ausgestaltet, d.h. der Düsenkörper 1 und der Ablenkkörper 2 sind Bestandteil eines einzigen Bauteils. Der Ablenkkörper 2 ist über vier Stützen 3 mit dem Düsenkörper 1 verbunden. Die Stern-Kegel-Düse kann beispielsweise mittels additiver Fertigung oder mit selektivem Lasersintern aus rostfreiem SLS-Material hergestellt werden.

Die Fig. 2 zeigt eine Seitenansicht der Stern-Kegel-Düse. Gut erkennbar ist die Kegelform des Ablenkkörpers 2 mit der um ca. 45° von der Vertikalen abgewinkelten Mantelfläche.

Die Fig. 3 zeigt die Stern-Kegel-Düse von unten. Der Innenkanal 11 des Düsenkörpers ist im Wesentlichen rundlich geformt, weist allerdings eine wellenförmige Seitenwand auf. In der Verlängerung erkennbar ist der im Vergleich zum Innenkanal 11 einen kleineren Durchmesser aufweisenden Ablenkkörperinnenkanal 25. Die insgesamt vier Rastelemente 13 des Düsenkörpers 1 sind ebenfalls sichtbar.

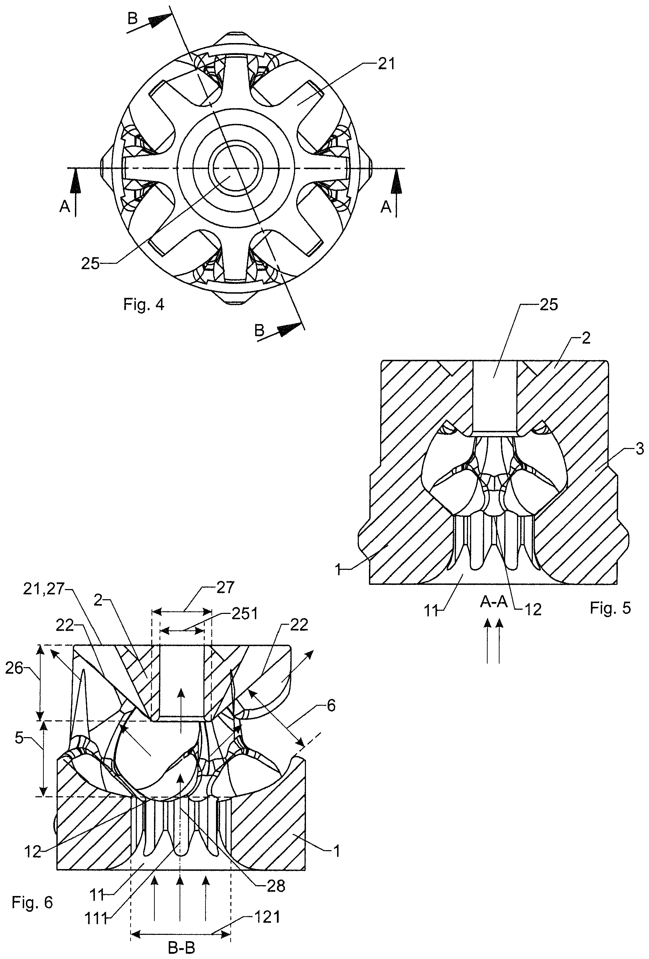

Die Fig. 4 zeigt die Stern-Kegel-Düse mit Ansicht von oben. Sehr gut sichtbar ist die sternförmige Grundfläche 21 des Ablenkkörpers 2 und der zentriert angeordnete Ablenkkörperinnenkanal 25.

Die Fig. 5 ist eine Schnittzeichnung durch die Stern-Kegel-Düse entlang der in Fig. 4 eingezeichneten Schnittfläche A-A. Sie zeigt den wellenförmig ausgestalteten Innenkanal 11 und die horizontal angeordnete Auslassöffnung 12, durch welche der Hauptfluidstrahl den Innenkanal 11 verlässt. An der Auslassöffnung 12 weist der Fluidhauptstrahl erstmals Umgebungsdruck auf.

Die Stern-Kegel-Düse ist einstückig ausgestaltet, wobei der Düsenkörper 1 mit dem Ablenkkörper 2 über Stützen 3 verbunden ist.

Die Fig. 6 ist eine Schnittzeichnung durch die Stern-Kegel-Düse entlang der in Fig. 4 eingezeichneten Schnittfläche B-B.

Markiert sind der Durchmesser 121 der Auslassöffnung 12 des Innenkanals 11 und der Durchmesser 251 des Ablenkkörperinnenkanals 25. Der Durchmesser 251 des Ablenkkörperinnenkanals 25 ist deutlich kleiner dimensioniert als der Durchmesser 121 des Innenkanals 11. Dies hat zur Folge, dass ein erster Teil des Fluidhauptstrahls vertikal durch den Ablenkkörperinnenkanal 25 strömt, während ein zweiter Teil des Fluidhauptstrahls vom Ablenckörper 2 abgelenkt wird und ca. im 45°-Winkel entlang der Mantelfläche 22 des Ablenkkörpers 2 strömt.

Im Weiteren ist der Abstand 5 zwischen der Auslassöffnung 12 und dem Ablenkkörper 2 markiert. Der Abstand 5 beträgt in der vorliegenden Ausführungsform ca. 1.5 mm und der Ablenkkörper 2 ist damit vollständig ausserhalb des Innenkanals 11 angeordnet. Diese Beabstandung mit dem Abstand 5 hat den Vorteil, dass der Strömungsraum mit der Dimension 6 zwischen dem Düsenkörper 1 und dem Ablenkkörper 2, durch welchen das abgelenkte Fluid strömt, ausreichend gross ist, sodass keine Verstopfungen in diesem Strömungsraum entstehen. Auch im Innenkanal 11 entstehen dank seiner grosszügigen Dimensionierung keinerlei Verstopfungen.

Wiederum in Fig. 6 gut sichtbar ist, dass der Ablenkkörper 2 kegelförmig ausgestaltet ist. Er umfasst die Grundfläche 21 und die Mantelfläche 22. Am unteren Ende des Ablenkkörpers 2, welches gegen die Auslassöffnung 12 gerichtet ist, weist der kegelförmige Ablenkkörper 2 ein stumpfes Ende auf. Dies ergibt sich konstruktiv deshalb, weil auf der Zentralachse des kegelförmigen Ablenkkörpers 2 der Ablenkkörperinnenkanal 25 angeordnet ist. Wird auf den Ablenkkörperinnenkanal 25 verzichtet, kann das Ende des kegelförmigen Ablenkkörpers 2 auch annähernd spitzig ausgestaltet werden.

Unter Berücksichtigung des gesamten Abschnittes 26 des Ablenkkörpers 2, weist dieser an seinem unteren Ende, welches gegen die Auslassöffnung 12 gerichtet ist, die kleinste Querschnittsfläche 27 über den gesamten Abschnitt 26 auf. In Strömungsrichtung gegen oben entlang des Abschnittes 26 vergrössert sich die Querschnittsfläche 27 kontinuierlich bis sie an der Grundfläche 21 am grössten ist.

Die Querschnittsflächen 27 des Ablenkkörpers 2 sind vorliegend diejenigen Querschnittsflächen, zu welchen der gemittelte Geschwindigkeitsvektor 28 der Fluidströmung im Innenkanal 11 bei der Auslassöffnung 12 normal steht. Der Geschwindigkeitsvektor 28 ist im vorliegenden Ausführungsbeispiel mit der Mittelachse 111 des Innenkanals 11 kollinear.

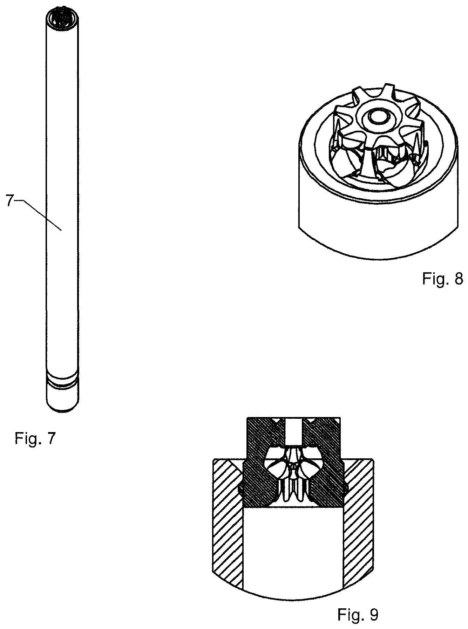

Die Fig. 7 zeigt ein Zufuhrrohr 7 eines Geschirrspülers mit einer an seinem oberen Ende eingesetzten Stern-Kegel-Düse. Das obere Ende des Zufuhrrohrs ist in Fig. 8 vergrössert dargestellt und in Fig. 9 mit einer Schnittzeichnung illustriert.

Alternativ kann die Stern-Kegel-Düse auch kappenförmig ausgestaltet sein, sodass sie nicht eingesetzt, sondern aufgesetzt werden muss.

Durch das Zufuhrrohr 7 und durch die Stern-Kegel-Düse strömt bei einem Geschirrspüler sowohl Reinigungsflüssigkeit als auch Spülwasser.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Düse zur Reinigung eines Behälters umfassend
- einen Düsenkörper (1) mit einem fluiddurchströmten Innenkanal (11), an dessen Ende eine Auslassöffnung (12) angeordnet ist,
- einen Ablenkkörper (2) mit einer Oberfläche zur Ablenkung des aus der Auslassöffnung (12) austretenden Fluidstrahls,
**dadurch gekennzeichnet, dass** der Ablenkkörper (2) zumindest in einem Abschnitt (26) derart ausgestaltet ist, dass eine Querschnittsfläche (27) des Ablenkkörpers (2) in Strömungsrichtung grösser wird.

2. Düse nach Anspruch 1, wobei ein Ende des Ablenkkörpers (2), welches zur Auslassöffnung (12) gerichtet ist, die kleinste Querschnittsfläche (27) des Ablenkkörpers (2) aufweist.

3. Düse nach einem der vorangehenden Ansprüche, wobei der Abschnitt (26) und/oder der Ablenkkörper (2) mindestens teilweise, insbesondere vollständig, ausserhalb des fluiddurchströmten Innenkanals (11) angeordnet sind,
insbesondere wobei der Abschnitt (26) und/oder der Ablenkkörper (2) von der Auslassöffnung (12) um mindestens 0.5 mm, insbesondere 1 mm, insbesondere 1.5 mm beabstandet sind.

4. Düse nach einem der vorangehenden Ansprüche, wobei der Abschnitt (26), insbesondere der Ablenckörper (2), als ein Kegel, insbesondere als ein stumpfer oder ein spitzer Kegel, ausgestaltet ist,
insbesondere wobei die Spitze oder die abgestumpfte Spitze des Kegels gegen die Auslassöffnung (12) gerichtet ist.

5. Düse nach Anspruch 4, wobei der Innenkanal (11) rohrförmig ist und eine Rohrmittelachse (111) aufweist, und die Normale der Grundfläche (21) des Kegels parallel zur Rohrmittelachse (111) ist, insbesondere wobei die Rohrmittelachse (111) durch die Spitze des Kegels verläuft.

6. Düse nach einem der vorangehenden Ansprüche, wobei derjenige Bereich der Oberfläche des Ablenckörpers (2), welcher der Auslassöffnung (12) abgewandt ist, sternförmig ausgestaltet ist.

7. Düse nach einem der vorangehenden Ansprüche, wobei an der Oberfläche des Ablenkkörpers (2) mindestens ein, insbesondere mehr als drei, insbesondere mehr als fünf, insbesondere mehr als sieben, Trennelemente (24) angeordnet sind, welche derart angeordnet und ausgestaltet sind, dass der Fluidstrahl in mindestens zwei, insbesondere mindestens vier, insbesondere mindestens acht, Teilfluidstrahlen aufgetrennt wird,
insbesondere wobei die Trennelemente (24) Stege oder Rippen sind, insbesondere wobei die Stege oder Rippen normal zur Oberfläche des Ablenkkörpers (2) angeordnet sind.

8. Düse nach einem der vorangehenden Ansprüche, wobei die Oberfläche des Ablenkkörpers (2) Vertiefungen, insbesondere Furchen (23), zur Führung des Fluids, aufweist.

9. Düse nach einem der vorangehenden Ansprüche, wobei die Düse einstückig ausgestaltet ist.

10. Düse nach einem der vorangehenden Ansprüche, wobei der Ablenkkörper (2) ein Ablenkkörperinnenkanal (25), insbesondere ein zylindrischer Ablenkkörperinnenkanal (25), aufweist,
insbesondere wobei der Ablenkkörperinnenkanal (25) derart angeordnet und ausgestaltet ist, dass das aus der Auslassöffnung (12) austretende Fluid den Ablenkkörperinnenkanal (25) ohne Ablenkung durchströmt.

11. Düse nach einem der vorangehenden Ansprüche, aufweisend genau eine einzige der Auslassöffnung (12) .

12. Geschirrspüler umfassend
- eine Düse nach einem der vorangehenden Ansprüche,
- ein Durchflusssieb mit einer Maschenweite zum Sieben von Prozesswasser,
wobei der Innenkanal (11) und die Auslassöffnung (12) einen Durchmesser aufweisen, welcher grösser als die Maschenweite des Siebes ist.

13. Geschirrspüler,
- nach Anspruch 12, oder
- mit einer Düse nach einem der Ansprüche 1 bis 11,
wobei der Geschirrspüler derart ausgestaltet ist, dass Reinigungswasser und Klarspülwasser durch die Düse strömen.

14. Verfahren zum Herstellen einer Düse nach einem der Ansprüche 1 bis 11, wobei die Herstellung mittels additiver Fertigung oder mit selektivem Lasersintern, insbesondere aus rostfreiem SLS-Material, erfolgt.
